# EUROPÄISCHE PATENTSCHRIFT

(11) **EP 1 697 747 B1**
(45) Veröffentlichungstag und Bekanntmachung des Hinweises auf die Patenterteilung: **03.12.2008**
(21) Anmeldenummer: 04790945.2
(22) Anmeldetag: 28.10.2004
(51) Int. Cl.: G01N 33/533, B01J 19/00, B01F 13/00

(54) **VERFAHREN UND VORRICHTUNG ZUR MARKIERUNG VON BIOMOLEKUELEN**
METHOD AND DEVICE FOR MARKING BIOMOLECULES
PROCEDE ET DISPOSITIF DE MARQUAGE DE BIOMOLECULES

(30) Priorität: 20.12.2003 DE 10350484
(43) Veröffentlichungstag der Anmeldung: 06.09.2006
(73) Patentinhaber: Ehrfeld Mikrotechnik BTS GmbH, 55234 Wendelsheim (DE)
(72) Erfinder: AZZAWI, Alexander, 55129 Mainz (DE); DERSCHUM, Stefan, 55234 Wendelsheim (DE)
(74) Vertreter: Lütjens, Henning
(86) Internationale Anmeldenummer: PCT/EP2004/012172
(87) Internationale Veröffentlichungsnummer: WO 2005/064335

(56) Entgegenhaltungen:
- WO-A-96/40398
- SPIKMANS VALERIE ET AL: "On-line on-chip post-column derivatisation reactions for pre-ionisation of analytes and cluster analysis in gradient micro-liquid chromatography/electrospray mass spectrometry." RAPID COMMUNICATIONS IN MASS SPECTROMETRY : RCM. 2002, Bd. 16, Nr. 14, 2002, Seiten 1377-1388, XP009049801 ISSN: 0951-4198
- KLING KERSTIN ET AL: "Visualization of micro-and macromixing in liquid mixtures of reacting components" PROC. ASME/JSME JOINT FLUIDS ENG. CONF.; PROCEEDINGS OF THE ASME/JSME JOINT FLUIDS ENGINEERING CONFERENCE 2003, Bd. 2 C, 2003, Seiten 2329-2335, XP009049802
- BRINKLEY M: "A BRIEF SURVEY OF METHODS FOR PREPARING PROTEIN CONJUGATES WITH DYES, HAPTENS, AND CROSS-LINKING REAGENTS" BIOCONJUGATE CHEMISTRY, AMERICAN CHEMICAL SOCIETY, WASHINGTON, US, Bd. 3, Nr. 1, Januar 1992 (1992-01), Seiten 2-13, XP000261480 ISSN: 1043-1802
- HAUGLAND R P: "COUPLING OF MONOCLONAL ANTIBODIES WITH FLUOROPHORES" METHODS IN MOLECULAR BIOLOGY, HUMANA PRESS INC., CLIFTON, NJ, US, Bd. 45, 1995, Seiten 205-221, XP009020645

## Beschreibung

Gegenstand der Erfindung ist ein Verfahren zur effizienten Markierung von Biomolekülen, vorzugsweise Proteinen, Nukleinsäuren und Sacchariden, mit Hilfe eines Mikromischers sowie eine Vorrichtung mit dem das erfindungsgemäße Verfahren mit einem geringen Aufwand an weiteren Hilfsmitteln durchgeführt werden kann. Die Markierungsreaktion im Mikromischer ist herkömmlichen Methoden zur Markierung von Biomolekülen überlegen.

Es ist bekannt, dass Biomoleküle, insbesondere Proteine, für eine empfindliche und spezifische Detektion häufig mit Markermolekülen versehen werden müssen. Diese Markermoleküle können Farbstoffe, elektrochemisch aktive Verbindungen oder auch selbst Proteine sein, wie die Peroxidase oder das Green Fluorescent Protein (GFP). Derartige Markierungen werden z.B. beschrieben von M. Brinkley in Bioconjugate Chemistry 1992, 3, 2-13 und von R.P. Haugland in Methods in Molecular Biology 1995, 45, 205-221.

Eine Möglichkeit für die Markierung ist die Umsetzung eines Biomoleküls, das zum Zwecke einer spezifischen Markierung auch in einer abgewandelten Form vorliegen kann, mit einer aktivierten Form des Markermoleküls. Typischerweise werden am Biomolekül vorhandene Amino- oder Sulfhydrylgruppen markiert.

Für die Markierung von Aminogruppen, zum Beispiel die in einem Protein vorhandenen e-Aminogruppen der Aminosäure Lysin, wird ein Markermolekül mit einer entsprechenden aktivierten Funktionalität versehen. Diese Funktionalität kann beispielsweise ein Isothiocyanat (ITC) oder eine durch eine N-Hydroxysuccinimidgruppe (NHS) oder eine Tetrafluorphenylgruppe (TFP) aktivierte Carbonsäurefunktion am Markermolekül sein. Ein NHS-Ester reagiert dann beispielsweise mit einer primären Aminogruppe zum entsprechenden Amid gemäß folgender Reaktion:

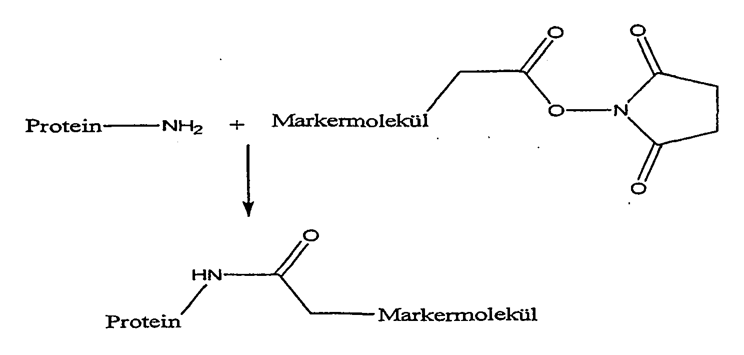

Für die Aktivierung von Sulfhydrylgruppen werden entsprechende Maleimide eingesetzt.

Für die Markierung von Biomolekülen, wie Proteine, werden geeignete aktivierte Derivate von Fluoreszenzmarkern von verschiedenen Herstellern in einer großen Zahl angeboten. Vergleicht man die für die Markierung von Proteinen angegebenen Vorschriften, so ist eine weitgehende Übereinstimmung zwischen den verschiedenen Vorschriften festzustellen: Das Protein wird in einem aminfreien Puffer (pH 7 bis 9) in einer Konzentration von etwa 10 mg/ml gelöst. Zur Verbesserung der Löslichkeit können noch 5% Dimethylsulfoxyd (DMSO) zugegeben werden. Dann werden zwischen 2 und 10 molare Äquivalente Farbstoffe, gelöst in DMSO, zugesetzt und die Reaktion bei Raumtemperatur 5 Minuten bis 2 Stunden gerührt. Anschließend wird die Reaktion durch Zugabe einer Hydroxylaminlösung oder durch das Abtrennen des freien Farbstoffes, zum Beispiel durch Gelpermeationschromatographie, gestoppt.

Bei der bisher üblichen Markierung von Biomolekülen, insbesondere Proteinen z.B. mit Farbstoffen oder Fluoreszenzmarkern kann es jedoch zu Problemen kommen, weil sich nach der Reaktion mit dem Biomolekül gelegentlich ein unlöslicher Niederschlag bildet. Dieser Niederschlag ist auf ein Übermarkieren mit dem Marker zurückzuführen. Die übermarkierten Moleküle können nicht für die weitere Anwendung eingesetzt werden und gehen somit verloren.

Ebenso kann es bei einer unregelmäßigen Markierung von Biomolekülen zu einer sehr starken Markierung einzelner Moleküle kommen. Dies führt zu einem Selbstquenching der Fluoreszenz in diesen Molekülen und somit zu einer geringeren Fluoreszenzintensität der gesamten Probe.

Es stellte sich deshalb die Aufgabe ein Verfahren zu finden, bei dem nach Möglichkeit jedes Biomolekül mit genau der gewünschten Anzahl von Markermolekülen reagiert und eine für dieses Verfahren geeignete Vorrichtung zur Verfügung zu stellen. Das Protein bzw. das Biomolekül und das Markermolekül müssen also in vorher festgelegen Mengenverhältnissen in möglichst keinen Volumenkompartimenten schnell miteinander vermischt werden. Anschließend muss gewährleistet sein, dass die Moleküle ausreichend lange Zeit in Kontakt sind, um miteinander zu reagieren. Nach dieser Zeit wird die Reaktion abgebrochen, um Nebenreaktionen zu vermeiden.

Es wurde nun ein Verfahren zur Markierung von Proteinen, die freie Reaktivgruppen tragen, wie freie Amino-, Thiol-, gruppen, durch eine damit unter Ausbildung einer kovalenten Bindung reagierende Markerverbindung gefunden, bei dem Lösungen beider Verbindungen, d.h. Biomolekülösung und Lösung der Markerverbindung, in definierten Mengenströmen, einem Mikromischer, vorzugsweise einem statischen Mikromischer, zugeführt und dort intensiv vermischt werden. Anschließend wird die Reaktionsmischung vorzugsweise in eine Verweilstruktur eingespeist, wo sie eine durch das Volumen der Verweilstruktur und die Fließgeschwindigkeit der Reaktionsmischung vorbestimmte Zeit verbleibt. Nach einer durch die Reaktionsbedingungen vorgegeben Zeit wird die Reaktion abgebrochen.

Als Proteine können alle gängigen Verbindungen eingesetzt werden, wie z.B. Enzyme, Membranproteine, Antikörper.

Erfindungsgemäß wird durch den Einsatz von Mikromischern und Verweilstrukturen die Effizienz der Markierungsreaktion aufgrund der besseren Durchmischung und Dosierung der Reaktanden und dem sehr genau einstellbaren und engen Verweilspektrum gegenüber allen bisher bekannten Methoden erheblich gesteigert.

Für das erfindungsgemäße Verfahren können alle bekannten statischen Mikromischer eingesetzt werden. Hierbei werden vorzugsweise statische Mischer eingesetzt, die kontinuierlich durchströmt werden, wie z.B. Multilaminationsmischer. Darunter fallen beispielsweise Stapelmischer, Schlitzplattenmischer, d.h. Mischer, bei denen Ströme von zwei unterschiedlichen Flüssigkeiten aufgefächert und die Teilströme durch eine interdigitale Konfiguration alternierend kombiniert werden, oder auch Kammmischer, bei denen die beiden zu vermischenden Fluidströme in eine Vielzahl von dünnen Lamellen oder Filmen aufgefächert werden und diese Lamellen anschließend abwechselnd ineinander gekämmt werden, so dass es durch Diffusion und Sekundärströmungen zu einer schnellen Vermischung kommt. Diese sind z.B. aus dem Produktprogramm der Ehrfeld Mikrotechnik BTS GmbH (EMB) erhältlich.

Ebenfalls möglich sind V-Typ Mischer des Forschungszentrums Karlsruhe (FZK), Split und Recombinemischer, wie z.B. Kaskadenmischer oder Rautenmischer (EMB), in dem die Lösungsströme in kleinere Ströme aufgeteilt und diese kleinen Ströme wiederholt zusammengeführt und aufgeteilt werden, Caterpillarmischer der Instituts für Mikrotechnik Mainz (IMM), oder auch Mischer mit einer Querschnittsverengung, wie Fokusmischer oder Zyklonmischer (IMM), oder auch Jetmischer der Firma Synthesechemie und Prallstrahlmischer (IMM) oder Ventilmischer (EMB).

Für das erfindungsgemäße Verfahren wird vorzugsweise ein Mikromischer eingesetzt, bei dem die Anschlüsse und Zuleitungen so gestaltet sind, das nur ein geringes Volumen bis zum Ein- bzw. Austritt der eigentlichen Mikrostruktur durchströmt werden muss (totvolumenarmer Mikromischer). Dieses Volumen liegt vorzugsweise unter 10 % des Volumens der zu mischenden Lösungen, besonders bevorzugt unter 1%, also z.B. bei einer Lösungsmenge von 500 µl unter 5 µl. Besonders geeignet ist ein aus PEEK (Polyetheretherketon) hergestellter Multilaminationsmikromischer. In den Beispielen wurden die Kapillareingänge der Zuleitungen unmittelbar gegenüber den Öffnungen der Mikrostruktur angebracht, so dass dadurch das Totvolumen weiter minimiert werden konnte.

In einer bevorzugten Ausführungsform der Erfindung werden Mikromischer mit Kanalweiten von kleiner als 100 µm eingesetzt.

In einen derartigen Mikromischer werden die Biomolekül- und die Markermoleküllösungen mittels präzisen und pulsationsarmen Pumpen, wie z.B. Spritzenpumpen, zu dosiert. Vorzugsweise wird anschließend die so vermischte Reaktionslösung in eine Verweilstruktur mit vorgegebener Verweilzeit eingespeist.

Alternativ dazu können die Lösungen aber auch über zwei miteinander gekoppelte Spritzen in den Mikromischer dosiert werden.

Die Mischvorrichtung enthält dabei vorzugsweise zwei Öffnungen zum Aufsetzen von Dosierspritzen, die eigentliche mikrostrukturierte Mischstruktur, eine kurze kapillarartige Struktur, mit der eine gewisse Verweilzeit und ein Druckabfall zur leichteren Dosierung realisiert wird, einen Auslass für die gemischte Reaktionslösung und Aussparungen, damit die Mischvorrichtung sicher auf die gängigen Reaktionsgefäße, wie etwa z.B. die Reaktionsgefäße (z.B. 0,5-2 ml) der Firma Eppendorf oder die Schraubdeckelröhrchen (z.B. 2-50 ml) der Firma Greiner-Bio One aufgesetzt werden kann.

Zum Dosieren der Lösungen in die Mischvorrichtung können zwei handelsübliche Spritzen eingesetzt werden, siehe z.B. Fig. 2 oder 3. Die Spritzen werden mit den Lösungen befüllt. Das Volumen der Spritzen orientiert sich vorzugsweise am gewünschten Dosierverhältnis der beiden Lösungen. Nach dem Befüllen werden die Spritzen auf die entsprechenden Öffnungen der Mischvorrichtung aufgesetzt. In einer Ausführungsform der Erfindung werden die beiden Kolben und Stempel der Spritze mit kleinen Hilfsvorrichtungen miteinander verbunden, so dass sich beim Herunterdrücken der verbundenen Stempel beide Stempel mit der gleichen Geschwindigkeit nach unten bewegen. Dadurch wird sichergestellt, das ein dem Verhältnis der Durchmesser der Spritzenzylinder entsprechendes Volumenverhältnis der beiden Reaktionslösungen in die Mischvorrichtung dosiert wird, siehe Fig. 4.

Bei der Mischvorrichtung kann es sich um eine Vorrichtung zum mehrfachen Gebrauch handeln. Es ist aber auch möglich mittels eines kostengünstigen Herstellungsverfahrens, wie zum Beispiel durch Spritzguss, eine große Zahl kostengünstiger Mischvorrichtungen herzustellen, die zum einmaligen Gebrauch gedacht sind.

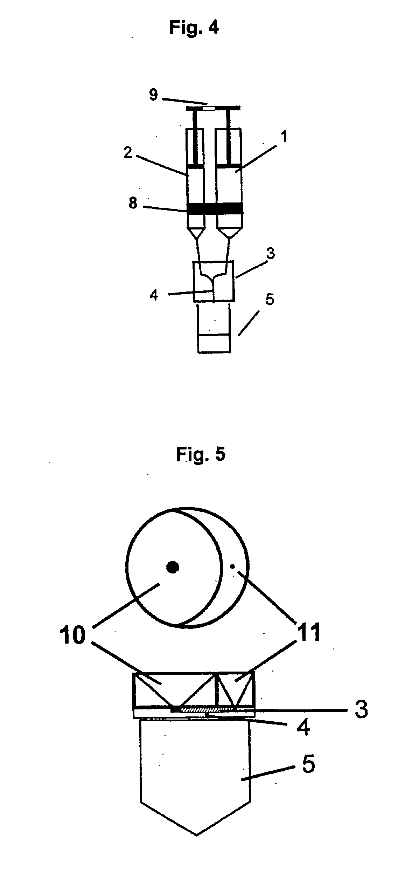

Alternativ zu den bereits beschriebenen Verfahren ist eine Zudosierung in den Mikromischer auch über Zentrifugalkraft möglich, wie beispielhaft in Fig. 5 verdeutlicht.

Hierfür enthält die Mischvorrichtung vorzugsweise zwei Reservoirs an der Oberseite (10/11), die eigentliche mikrostrukturierte Mischstruktur (3), eine kurze kapillarartige Struktur, mit der eine gewisse Verweilzeit und ein Druckabfall zur leichteren Dosierung realisiert wird, einen Auslass für die gemischte Reaktionslösung und Aussparungen, damit die Mischvorrichtung sicher auf die gängigen Reaktionsgefäße aufgesetzt werden kann.

Zum Dosieren der Lösungen in die Mischvorrichtung werden die beiden Lösungen in die Reservoirs (10/11) eingefüllt. Dabei entspricht das Größenverhältnis der Reservoirs dem üblicherweise in die Reaktion eingesetzten Volumenverhältnis der Lösungen. Über kleine, genau definierte Öffnungen sind die Reservoirs mit der Mischstruktur (3) verbunden. Die Dimension der Öffnung und der Zuleitungen ist vorzugsweise so gewählt, dass erst bei der Einwirkung einer Kraft auf die Lösungen im Reservoir die beiden Lösungen im gewünschten Verhältnis in die Mischstruktur dosiert werden.

Die Kraft kann durch das Zentrifugieren der gefüllten, auf ein Auffanggefäß, beispielsweise ein 2 ml Reaktionsgefäß, aufgesetzten Mischvorrichtung in einer Laborzentrifuge erzeugt werden. Dabei ist die Ausführungsform bevorzugt, in der die beiden Öffnungen der Reservoirs zu der Mischstruktur hin genau rechtwinklig zur Rotationsachse der Zentrifuge ausgerichtet sind, damit auf beide Lösungen die gleiche Kraft wirkt. Um eine leichtere Ausrichtung zu ermöglichen ist die Mischvorrichtung mit entsprechenden Markierungen versehen.

Ebenso kann die Kraft durch Anlegen eines Druckes an der Oberseite der Reservoirs oder durch Anlegen eines Unterdruckes am Auslass der Mischvorrichtung erzeugt werden.

Bei der Mischvorrichtung kann es sich ebenfalls um eine Vorrichtung zum mehrfachen Gebrauch handeln. Es ist aber auch möglich mittels eines kostengünstigen Herstellungsverfahrens, wie zum Beispiel durch Spritzguss, eine große Zahl kostengünstiger Mischvorrichtungen herzustellen, die zum einmaligen Gebrauch gedacht sind.

Die erfindungsgemäße Vorrichtung zur Durchführung eines Verfahrens zur Markierung von Reaktivgruppen tragenden Biomolekülen, vorzugsweise Proteinen, enthält daher vorzugsweise 2 Reservoirs für Flüssigkeiten, die ggf. über eine Zudosiereinheit, vorzugsweise 2 Spritzen, verfügen, einen Mikromischer, ggf. eine Verweilstruktur und ggf. ein beliebiges Auffanggerät für das Produkt.

Bei Verweilzeitstrukturen im Sinne der Erfindung handelt es sich um abgegrenzte Volumina, die aufgrund ihres inneren Volumens in einer vorgegebenen Zeit durchströmt werden können, wie z.B. Kapillaren oder auch Mikromischer. Es können unterschiedliche Verweilstrukturen eingesetzt werden, die sich jeweils durch eine möglichst enge Verweilzeitverteilung auszeichnen und geringe Totvolumina aufweisen. Im einfachsten Fall besteht die Verweilstruktur aus einer Kapillare vorgegebener Länge, aber auch andere gleichmäßig durchströmte Volumina oder Anordnungen können eingesetzt werden. Ebenfalls können Verweilstrukturen eingesetzt werden, bei denen das Gemisch im Kreislauf umgepumpt wird, wobei ggf. ein Mikromischer in den Kreislauf eingefügt ist. Letzteres vor allem wenn zwei Phasen und Phasentrennung vorliegen.

Nach dem Durchlaufen der Verweilstruktur wird die Reaktionslösung aufgefangen. Dabei kann die Reaktion durch Zudosieren eines weiteren Reagenzes mittels eines weiteren Mikromischers, durch thermische Behandlung mit einem Mikrowärmetauscher oder durch Eintropfen der Reaktionsmischung in ein Auffanggefäß mit einem entsprechenden Abbruchreagenz gestoppt werden.

Als Markerverbindung wird vorzugsweise ein Farbstoffmolekül eingesetzt, das eine reaktive Gruppe trägt, d.h. freien Amino-, Thiol-, Alkohol-, Aldehyd/Keton- und/oder Carbonsäuregruppen. Diese Reaktivgruppen-tragenden Markerverbindungen reagieren unter Bildung kovalenter Bindungen, wie sie z.B. in M. Brinkley in Bioconjugate Chemistry 1992, 3, 2-13 und von R.P. Haugland in Methods in Molecular Biology 1995, 45, 205-221 beschrieben sind.

Die Markierung von Alkoholen in Biomolekülen, wie z.B. Proteinen, wie Serin, Threonin und Tyrosin) geschieht vorzugsweise über Sulfonsäurechloride, wie z.B. Dansyl-chlorid (5-Dimethylamino-naphthalin-1-sulfonylchlorid) oder der Oxidation mit Natriumperiodat zum Aldehyd und der anschließenden Markierung mit Hydrazinderivaten der Farbstoffe, wie z.B. Hydrazide, Semicarbazide, Carbohydrazide, wie z.B. Fluorescein-5-thiosemicarbazid.

Die Markierung von Aldehyden/Ketonen erfolgt vorzugsweise mit Aminen (Schiff-Basen) oder mit Hydrazindervidaten zum Hydrazid, während die Markierung von Carbonsäuren vorzugsweise mit Hydrazindervidaten zum Hydrazid erfolgt.

Besonders bevorzugt dabei ist, dass das Markermolekül eine reaktive Gruppe trägt, die mit den freien Amino-, Triol,- tragenden Protein unter Bildung kovalenter Bindungen reagiert und das Markermolekül zudem eine chemische Reaktion katalysiert, die zu einer leicht detektierbaren Farbänderung oder Änderung des Redoxpotentials seines Substrates führt, wie z.B. Peroxidasen und alkalische Phosphatasen.

Bersonders bevorzugt als Reaktivgruppen sind Amino- und/oder Thiolgruppen.

Die Markierungsreaktion kann nach Verlassen der Verweilstruktur dabei durch Zugabe einer Verbindung abgebrochen werden, die mit den noch nicht umgesetzten Markermolekülen schnell reagiert., Dies sind handelsübliche Amino- und/oder Thiolgruppen-hältige Verbindungen, wie z.B. Hydroxylamin, Glutathion oder Mercaptoethanol.

Ebenfalls kann die Reaktion nach Verlassen der Verweilstruktur durch chromatographisches Abtrennen der noch nicht umgesetzten Markermoleküle abgebrochen werden. Hierfür eignen sich alle handelsüblichen Chromatographieverfahren, wie z.B. die Gelpermeationschromatographie mit beispielsweise Sephadex ^{®} G oder Biogel ^{®} P oder die Ionentauscherchromatographie, Affinitätschromatographie, Reversed Phase Chromatographie (HPLC) und die Festphasenextrakion.

In einer weiteren Ausführungsform der Erfindung kann die Reaktion nach Verlassen der Verweilstruktur durch eine thermische Behandlung der Reaktionslösung abgebrochen werden. Dies geschieht vorzugsweise durch Kühlen der Reaktionslösung vorzugsweise mittels eines mikrostrilkturierten wärmetauschers oder durch das Erhitzen der Reaktionslösung vorzugsweise mittels eines mikrostrukturierten Wärmetauschers.

Das erfindungsgemäße Verfahren führt zu höheren Ausbeuten und zu einer verbesserten Probenqualität, da eine schnelle und gründliche Vermischung der beiden Reaktionspartner im Mikromischer stattfindet und die Verweilzeit in der Verweilstruktur sehr genau eingestellt werden kann.

Die Erfindung wird durch die beiliegenden Abbildungen und die folgenden Beispiele näher erläutert, ohne dass diese darauf beschränkt ist.

Es zeigen:

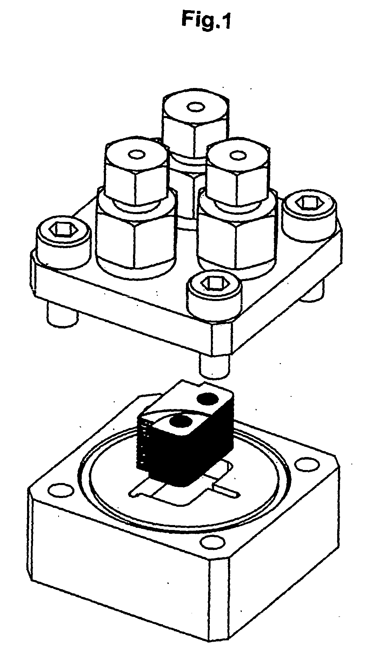

- Fig. 1: die Explosionszeichnung eines totvolumenarmen Mikromischers,

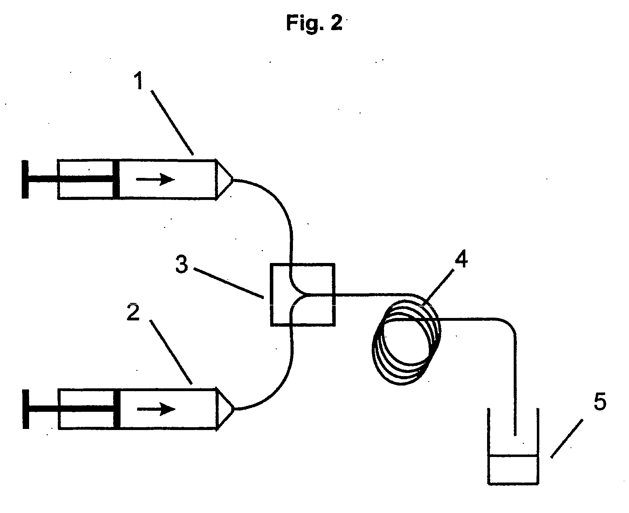

- Fig. 2: den schematischen Versuchsaufbau mit dem Mikromischer,

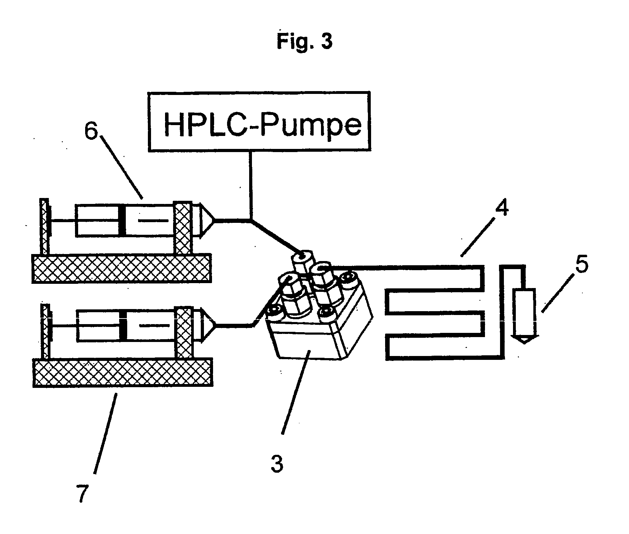

- Fig. 3: die vollständige Versuchsapparatur,
- Fig. 4: den schematischen Versuchsaufbau mit einem Mikromischer, der das gleichzeitige Dosieren über 2 Spritzen ermöglicht und
- Fig. 5: den schematischen Versuchsaufbau mit einer Zudosierung aus 2 Reservoirs über Zentrifugalkraft oder Druck.

### Beispiele

### Beispiel 1

Es sollten Anti-human IgG Antikörper (aus der Ziege) mit Fluoresceinisothiocyanat (FITC) markiert werden. Die Antikörper (Lieferant: Sigma, Saint Louis) wurden in 0,1 M Natriumhydrogencarbonatpuffer (pH 8,5) gelöst (10 mg/ml). 10 mg FITC (Lieferant: Molecular Probes, Eugene) wurden in 1 ml DMSO gelöst. Zudem wurde zum Abstoppen der Reaktion eine 1,5 m Hydroxylaminlösung (pH 8,4) hergestellt.

Es wurde die herkömmliche Markierungsmethode, wie sie in der mitgelieferten Beschreibung des Fluoreszenzmarkers angegeben ist, mit der erfindungsgemäßen Markierung im Mikromischer verglichen.

### A1 und A2 - Herkömmliches Markierungsverfahren

Es wurden 2 Ansätze von je 75 µl Antikörperlösung in zwei 1,5 ml Reaktionsgefäße gegeben. Zu einem Ansatz (A1) wurden 37,5 µl der Farbstofflösung, zum anderen (A2) 10 µl gegeben. Es wurde 1 h bei Raumtemperatur kräftig geschüttelt. Anschließend wurden jeweils 100 µl der Hydroxylaminlösung zugegeben und erneut bei Raumtemperatur 20 min geschüttelt. Danach wurde der freie Farbstoff mittels Gelpermeationschromatographie (PD-10 Säulen, Lieferant: Amersham, Laufmittel: Phosphat gepufferte Salzlösung (PBS)) abgetrennt.

Die so gereinigten Antikörperlösungen wurden UV/Vis-spektroskopisch untersucht.

### B - Erfindungsgemäßes Markierungsverfahren

Die beiden in Abb. 2 gezeigten Spritzen (1, 2) wurden über Kapillaren mit einem Mikromischer (3) verbunden. Zusätzlich wurde eine in Abb. 3 gezeigte Spülleitung an der Kapillare einer der Spritzen angebracht, die zunächst mit einer Klemme verschlossen wurde. Diese Spülleitung wurde an eine HPLC-Pumpe angeschlossen, die mit Wasser (bidestilliert) versorgt wurde. Der Mikromischer (3) war wiederum mit einer Kapillare (4) mit einer Länge von 28 cm verbunden. Am Ende der Kapillare wurde ein Auffanggefäß (5) bereitgestellt, in dem die Reaktionslösung gesammelt wurde.

Das erfindungsgemäße Markierungsverfahren wurde nun in folgender Weise durchgeführt:
Die Antikörperlösung und die Farbstofflösung wurden jeweils in einer 1 ml Spritze aufgezogen und in jeweils eine der Spritzepumpen (6) und (7) eingespannt.

### Ansatz B1:

Es wurden 75 µl Proteinlösung (Flussrate: 150 µl/min) und 37,5 µl (Flussrate: 75 µl/min) Farbstofflösung innerhalb von 30 Sekunden in den Mischer dosiert. Anschließend wurde die Klammer der Spülleitung geöffnet und mittels einer HPLC-Pumpe mit einem Fluss von 0,2 µl/min die noch in der Kapillare befindliche Lösung herausgedrückt. Das Auffanggefäß (5) wurde verschlossen und eine Stunde lang bei Raumtemperatur geschüttelt.

### Ansatz B2:

Es wurden 75 µl Proteinlösung (Flussrate: 150 µl/min) und -10 µl (Flussrate: 20 µl/min) Farbstofflösung innerhalb von 30 Sekunden in den Mischer dosiert. Der Ansatz wurde wie in B1 beschrieben weiter behandelt.

Die beiden Ansätze der B-Reihe wurden nach einstündigem Schütteln mit jeweils 100 µl einer Hydroxylaminlösung versetzt und erneut bei Raumtemperatur 20 min geschüttelt. Anschließend wird der freie Farbstoff mittels Gelpermeationschromatographie (PD-10 Säulen, Lieferant: Amersham, Laufmittel PBS) abgetrennt.

Die so gereinigten Antikörperlösungen wurden UV/Vis-spektroskopisch untersucht.

Bei allen vier Ansätzen wurden aus den eingesetzten 0,75 mg Antikörpern nach der Aufreinigung der Reaktionen zwischen 0,6 und 0,7 mg markierte Antikörper erhalten. Die Markierungsgrade (Moleküle Farbstoff pro Molekülprotein) sind für A1: 8,62, für A2: 6,32, für B1: 4,91 und für B2: 2,30.

Die markierten Antikörper wurden auf ihre Eignung zur Anfärbung von Granulozyten getestet.

Dabei zeigte sich, dass die Proben der A-Reihe einen sehr hohen Hintergrund aufwiesen. Die Proben der B-Reihe zeigten einen geringen Hintergrund. Der Zellkern und die Mitosespindeln waren, wie erwartet, sehr gut sichtbar.

Durch den Einsatz des Mikromischers konnte also eine deutlich verbesserte Probenqualität erhalten werden. Dies ist auf eine gleichmäßigere Markierung der Antikörper zurückzuführen.

### Beispiel 2

In der in diesem Beispiel gezeigten Reaktion wird ein Protein mit einem Fluoreszenzmarker versehen. Dabei wurde der NHS-Ester des Fluoreszenzmarkers eingesetzt, um unspezifisch mit den ε-Aminogruppen der im Protein vorhandenen Aminosäure Lysin zu reagieren.

0,27 µM Protein wurden in 1.800 µl NaHCO₃-Puffer (0,1 M, pH 8) gelöst. Zur besseren Lösung wurden 100 µl DMSO zugegeben. 1,08 µM Farbstoff-NHS-Ester wurden in 140 µl DMSO gelöst. In den Mikromischer wurden über 1/16"-Kapillaren die Protein- und die Farbstofflösungen mittels Spritzenpumpen zudosiert. Der Gesamtfluss betrug 400 µl/min.

Am Ausgang des Mischers befand sich eine Kapillare, die so lang war, dass die Verweilzeit der Reaktionslösungen im System 5 Minuten betrug. Anschließend tropfte die Lösung in ein Auffanggefäß (5), das mit der Stopplösung (Hydroxylaminlösung) gefüllt war. Nachdem die entsprechenden Mengen Protein bzw. Farbstofflösung zudosiert waren, musste das zuletzt zudosierte Volumen noch 5 min durch die Verweilkapillare gedrückt werden. Dies geschah mit Hilfe einer HPLC-Pumpe, die mit einem Fluss von 400 µl/min Wasser durch die Kapillare pumpte.

Nach dem Reaktionsende wurde der in der Stopp-Lösung aufgefangene Markierungsansatz noch 15 Minuten gerührt und anschließend in einer Tischzentrifuge (Modell 5804 R von der Firma Eppendorf) bei Raumtemperatur und 13.200 rpm zentrifugiert, um unlösliche Bestandteile abzutrennen. Bei dieser Reaktion waren jedoch kaum unlösliche Bestandteile zu beobachten.

Der Ansatz wurde mit einer Pipette auf PD-10 Säulen (Lieferant: Amersham) aufgetragen. Das Eluat wurde in Gefriertrocknungsgläschen aufgefangen, eingefroren und anschließend lyophilisiert.

In Bezug auf die eingesetzte Menge Protein wurde eine Ausbeute von 86,6% mit einem Markierungsgrad von 2,9 erzielt. Mit der von den Herstellern empfohlenen Standardmethode wurden lediglich 45 % Ausbeute mit einem Markierungsgrad von 2,7 erzielt.

Zudem zeigte die im Mikromischer hergestellte Probe gegenüber der herkömmlich hergestellten Probe eine leicht verbesserte Aktivität im anschließenden Aktivitätstest.

### Bezugszeichenliste:

- 1: Spritze 1
- 2: Spritze 2
- 3: Mikromischer
- 4: Kapillarleitung
- 5: Auffanggefäß
- 6: Spritzenpumpe 1
- 7: Spritzenpumpe 2
- 8: Verbindungen beider Kolben
- 9: Verbindungen beider Stempel
- 10: Reservoir 1
- 11: Reservoir 2

## Patentansprüche

1. Verfahren zur Markierung eines freie Amino- und/oder Thiolgruppen tragenden Proteins durch eine damit unter Ausbildung einer kovalenten Bindung reagierende Markerverbindung, **dadurch gekennzeichnet, dass** Lösungen beider Verbindungen in definierten Mengenströmen einem Mikromischer, vorzugsweise einem statischen Mikromischer, zugeführt und dort intensiv vermischt werden, anschließend gegebenenfalls die Reaktionsmischung in eine Verweilstruktur eingespeist wird, dort eine durch das Volumen der Vereilstruktur und die Fließgeschwindigkeit der Reaktionsmischung vorbestimmte Zeit verbleibt und die Reaktion nach einer durch die Reaktionsbedingungen vorgegebenen Zeit abgebrochen wird.

2. Verfahren nach Anspruch 1, **dadurch gekennzeichnet, dass** ein Mikromischer mit Kanalweiten von kleiner als 100 µm eingesetzt wird.

3. Verfahren nach Ansprüchen 1 bis 2, **dadurch gekennzeichnet, dass** es sich bei dem eingesetzten Mikromischer um einen Multilaminationsmischer oder um einen Split- und Recombinemischer handelt.

4. Verfahren nach einem oder mehreren der Ansprüche 1 bis 3, **dadurch gekennzeichnet, dass** es sich bei der eingesetzten Verweilstruktur um eine Kapillare vorgegeben Volumens oder ein anderes gleichmäßig durchströmtes Volumen oder eine gleichmäßig durchströmte Anordnungen handelt.

5. Verfahren nach einem oder mehreren der Ansprüche 1 bis 4, **dadurch gekennzeichnet, dass** bei der eingesetzten Verweilstruktur die Reaktionsmischung im Kreislauf umgepumpt wird, wobei ggf. ein Mikromischer in den Kreislauf eingefügt ist.

## Claims

1. Process for labeling a protein bearing free amino and/or thiol groups with a label compound which reacts to form a covalent bond, **characterized in that** solutions of both compounds are fed in defined quantitative flow rates to a micromixer, preferably a static micromixer, and mixed intensively there, then the reaction mixture is optionally fed into a delay structure, and remains there for a time predetermined by the volume of the delay structure and the flow rate of the reaction mixture, and the reaction is terminated after a time predefined by the reaction conditions.

2. Process according to claim 1, **characterized in that** a micromixer with channel widths of less than 100 µm is used.

3. Process according to claims 1 to 2, **characterized in that** the micromixer used is a multilamination mixer or a split and recombine mixer.

4. Process according to one or more of claims 1 to 3, **characterized in that** the delay structure used is a capillary of predefined volume or another volume with uniform flow or an arrangement with uniform flow.

5. Process according to one or more of claims 1 to 4, **characterized in that** the reaction mixture is pumped in circulation in the delay structure used, a micromixer optionally being inserted into the circuit.

## Revendications

1. Procédé pour le marquage d'une protéine portant des groupes amino et/ou des groupes thiol libres par une liaison de marqueur réagissant avec cette protéine en formant une liaison covalente, **caractérisé en ce que** des solutions des deux composés sont amenées dans des débits définis à un micromélangeur, de préférence un micromélangeur statique, et sont mélangées ici de façon intensive, le mélange de réaction est injecté ensuite éventuellement dans une structure de séjour, reste là pendant un temps prédéfini par le volume de la structure de séjour et la vitesse d'écoulement du mélange de réaction et la réaction est interrompue après un temps prédéfini par les conditions de réaction.

2. Procédé selon la revendication 1, **caractérisé en ce qu'**un micromélangeur avec des largeurs de canal inférieures à 100 µm est utilisé.

3. Procédé selon les revendications 1 à 2, **caractérisé en ce que**, en ce qui concerne le micromélangeur utilisé, il s'agit d'un mélangeur à multilamination ou d'un mélangeur à fractionner (split) et d'un mélangeur à recombiner (recombine).

4. Procédé selon l'une quelconque ou plusieurs des revendications 1 à 3, **caractérisé en ce que**, en ce qui concerne la structure de séjour utilisée, il s'agit d'un capillaire de volume prédéfini ou d'un autre volume traversé de façon régulière ou d'un agencement traversé de façon régulière.

5. Procédé selon l'une quelconque ou plusieurs revendications 1 à 4, **caractérisé en ce que**, avec la structure de séjour utilisée, le mélange de réaction est transversé par pompage dans le circuit, un micromélangeur étant éventuellement inséré dans le circuit.
